(19) Europäisches Patentamt
European Patent Office
Office européen des brevets

(11) **EP 3 657 224 B1**

(12) **FASCICULE DE BREVET EUROPEEN**

(45) Date de publication et mention
de la délivrance du brevet:
**02.03.2022 Bulletin 2022/09**

(21) Numéro de dépôt: **19210670.6**

(22) Date de dépôt: **21.11.2019**

(51) Classification Internationale des Brevets (IPC):
**G02B 6/26** *(2006.01)* **G02B 5/04** *(2006.01)*

(52) Classification Coopérative des Brevets (CPC):
**G02B 6/264; G02B 5/04**

(54) **DISPOSITIF DE LIGNE À RETARD OPTIQUE FIXE OU VARIABLE**

FESTE ODER EINSTELLBARE OPTISCHE VERZÖGERUNGSLEITUNGSVORRICHTUNG

FIXED OR VARIABLE OPTICAL DELAY LINE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2018 FR 1871797**

(43) Date de publication de la demande:
**27.05.2020 Bulletin 2020/22**

(73) Titulaire: **Kylia**
**75003 Paris (FR)**

(72) Inventeur: **BOUTIN, Aurélien**
**33610 Cestas (FR)**

(74) Mandataire: **Jacobacci Coralis Harle**
**32, rue de l'Arcade**
**75008 Paris (FR)**

(56) Documents cités:
**CN-U- 203 324 573 US-A1- 2007 109 552**

## Description

### Domaine technique

L'invention relève du domaine général des systèmes optiques, en particulier dans les dispositifs fournissant un ajustement du retard sur une ligne à retard optique.

Elle trouve des applications dans tous les systèmes optiques opérant en espace libre et comportant un élément optique mobile, pour lesquels un faisceau doit être renvoyé de manière très précise.

### Technique antérieure

Il est connu des systèmes optiques permettant de renvoyer un faisceau ayant une direction d'incidence donnée avec la même direction.

Parmi ces systèmes optiques, le coin de cube est connu de longue date. Un faisceau incident sur un trièdre orthogonal réfléchissant produit un faisceau sortant parallèle, quel que soit l'angle d'incidence par rapport à la diagonale du cube.

On connaît également un montage optique appelé « œil de chat » qui est composé d'un système optique convergent, dans le plan focal duquel est placé un miroir perpendiculaire à l'axe optique de ce système optique.

Ces systèmes optiques assurent un auto-alignement de la direction du faisceau de sortie sur le faisceau incident.

Cependant, ces systèmes optiques de l'état de l'art ne permettent pas de renvoyer un faisceau incident les empruntant à la même position.

On observe, en effet, qu'un décalage latéral du faisceau incident occasionne, sur de tels systèmes optiques, un décalage latéral du faisceau retour.

Or, pour certaines applications scientifiques ou industrielles, l'obtention d'une invariance angulaire seule est insuffisante. Une invariance positionnelle du faisceau renvoyé est également nécessaire.

Notamment, dans le cas de la réalisation d'une ligne à retard optique, il peut être bénéfique d'avoir ces deux invariances.

Une approche connue pour réaliser une telle ligne à retard optique est de disposer deux miroirs plans à 90° l'un de l'autre sur un support mobile.

Un faisceau incident provenant d'une fibre optique d'entrée est adressé par une lentille de collimation sur un premier de ces miroirs, puis est réfléchi successivement par ces deux miroirs avant d'être renvoyé par une lentille d'imagerie sur une fibre optique de sortie. Le support mobile peut alors être déplacé en translation par rapport à un support fixe supportant les fibres optiques d'entrée et de sortie ainsi que les lentilles, pour varier le retard optique.

Dans un tel dispositif de ligne à retard optique de l'art antérieur, il est nécessaire d'aligner très précisément les miroirs l'un par rapport à l'autre, par rapport aux lentilles de collimation et par rapport aux fibres optiques d'entrée et de sortie.

Ces opérations d'alignement peuvent s'avérer longues et pénibles pour l'opérateur.

Pour surmonter cet inconvénient, il est alors connu d'utiliser un coin de cube, lequel est monté sur le support mobile en remplacement des miroirs. Sa mise en œuvre est plus aisée.

Toutefois, le support mobile doit être déplacé de manière très précise afin de maintenir la qualité de l'alignement. En effet, l'axe de translation doit être le plus linéaire possible et l'axe optique du faisceau doit être aligné sur cet axe de translation. Il en résulte des coûts d'installation élevés pour garantir que le système de déplacement mécanique du support mobile présente un minimum d'imperfections.

Quand bien même, une telle ligne à retard est regardée comme étant satisfaisante, elle conduit à des pertes d'insertion qui peuvent s'avérer non préjudiciables dans certains domaines techniques.

De plus, dans le temps, l'apparition de jeu mécanique lié à l'usure des pièces du système de déplacement mécanique du support mobile et/ou d'une inclinaison d'un des miroirs, sont susceptibles d'aggraver ces pertes d'insertion.

Ainsi, il existe un besoin pressant pour une ligne optique à retard variable dont la conception originale assure un positionnement et une orientation identiques du faisceau retour pour autoriser un couplage dans une fibre optique de sortie avec un minimum de perte d'insertion, même lorsque le système assurant la translation mécanique présente des imperfections.

CN 203 324 573 U divulgue un dispositif de ligne à retard optique selon l'art antérieur.

### Objet de l'invention

La présente invention vise un dispositif de ligne à retard optique fixe ou variable, simple dans sa conception et dans son mode opératoire, compact et économique, répondant aux inconvénients ci-dessus mentionnés.

Un objet de la présente invention est ainsi un dispositif de ligne à retard optique assurant le renvoi d'un faisceau incident au même endroit et avec la même direction, quelles que soit la position et la direction de ce faisceau incident.

Dès lors, les pertes de couplage dans une sortie optique, telle qu'une fibre optique, peuvent être les plus faibles possibles tout en étant stables sur toute la plage d'accordabilité.

La présente invention vise également un interféromètre optique ou un système d'imagerie pour acquérir l'image d'un échantillon équipés d'un tel dispositif de ligne à retard optique fixe ou variable.

## Exposé de l'invention

A cet effet, l'invention concerne un dispositif de ligne à retard optique fixe ou variable comprenant :

- une entrée optique,
- une sortie optique recevant un faisceau de retour,
- un ensemble optique qui dirige un faisceau le long d'un chemin optique de ladite entrée optique vers ladite sortie optique, ledit ensemble optique comprenant :
- un retroréflecteur assurant un auto-alignement de la direction du faisceau de sortie du retroréflecteur sur la direction du faisceau incident sur ledit retroréflecteur, la direction du faisceau de sortie, dite deuxième direction, étant opposée à celle du faisceau incident sur le retroréflecteur, et
- un élément optique dit à invariance positionnelle, comprenant une première surface réfléchissante, une deuxième surface réfléchissante et une troisième surface réfléchissante, lesdites première, deuxième et troisième surfaces réfléchissantes étant planes ou sensiblement planes, lesdites deuxième et troisième surfaces réfléchissantes étant agencées pour former un angle à 45° entre elles, le faisceau se propageant le long dudit chemin optique et empruntant ledit élément optique selon ladite deuxième direction étant réfléchi par ladite première surface avec un angle de 90° vers ladite deuxième surface, puis étant réfléchi successivement par lesdites deuxième et troisième surfaces pour ressortir dudit élément optique selon une direction parallèle à la direction du faisceau incident sur ledit élément optique, ledit faisceau de sortie dudit élément optique présentant un décalage en position $\Delta$ constant par rapport au faisceau incident sur ledit élément optique,
- ledit élément optique étant agencé dans ledit ensemble optique pour renvoyer ledit faisceau de sortie de l'élément optique dit à invariance positionnelle sur ledit retroréflecteur, le faisceau retour traversant ainsi ledit retroréflecteur.

De manière très avantageuse, ledit élément optique dit à invariance positionnelle peut être agencé de sorte que ledit faisceau empruntant ledit élément optique selon ladite deuxième direction, soit successivement réfléchi par la troisième surface, la deuxième surface et la première surface réfléchissantes pour ressortir selon une direction parallèle à la direction du faisceau incident sur ledit élément optique, ledit faisceau de sortie dudit élément optique présentant également un décalage en position $\Delta$ constant par rapport au faisceau incident sur ledit élément optique. En d'autres termes, le faisceau incident peut également suivre un chemin optique inverse dans l'élément optique dit à invariance positionnelle.

Le premier passage dans le retroréflecteur permet de réfléchir un faisceau incident avec une invariance angulaire de sorte que ce faisceau aura toujours l'orientation voulue par rapport à l'élément optique. Le faisceau réfléchi par l'élément optique est parallèle au faisceau incident empruntant cet élément optique mais décalé en position d'un écart constant. Le retroréflecteur et l'élément optique sont agencés de sorte que le faisceau retour effectue un deuxième passage dans le retroréflecteur, en étant décalé en position par rapport au premier passage, d'une valeur invariante. Le deuxième passage permet de renvoyer le faisceau retour au niveau du faisceau incident. Le faisceau retour est donc systématiquement parallèle au faisceau incident en étant décalé de manière constante par rapport à ce dernier, pour offrir un couplage optique optimal dans une sortie optique telle qu'une fibre optique.

Un double passage dans un même retroréflecteur est donc fourni dans ce dispositif de ligne à retard optique grâce à un élément optique particulièrement novateur et garantissant une invariance positionnelle du faisceau retour par rapport à un faisceau incident.

Dans différents modes de réalisation particuliers de ce dispositif de ligne à retard optique fixe ou variable, chacun ayant ses avantages propres et susceptibles de nombreuses combinaisons techniques possibles:

- ledit retroréflecteur est mobile par rapport auxdites entrée optique et sortie optique et par rapport audit élément optique pour varier la longueur dudit chemin optique.

Un tel dispositif optique autorise avantageusement la réalisation de très grands retards optiques.

- ledit retroréflecteur est mobile en translation selon une direction parallèle ou sensiblement parallèle à ladite deuxième direction.

On assure donc un déplacement linéaire du retroréflecteur par rapport à l'ensemble formé de l'entrée optique, de la sortie optique et de l'élément optique dit à invariance positionnelle.

La présente invention permet avantageusement l'utilisation de système de déplacement mécanique plus économique et donc susceptible de présenter quelques imperfections tels qu'un jeu mécanique. Une tolérance sur le vecteur de translation est ainsi obtenue, laquelle n'était pas acceptable avec les montages de l'art antérieur. Cette tolérance est atteinte sans perte de couplage, ce qui permet la mise en œuvre de système de translation moins onéreux.

- ledit retroréflecteur est un coin de cube ou un montage optique dit « œil de chat »,
- ce dispositif comporte plusieurs retroréflecteurs placés en alternance sur un support mobile en translation et sur une base fixe, ladite base fixe supportant ladite entrée optique, ladite sortie optique et ledit ensemble optique.

Il est ainsi possible dans un même montage d'augmenter le chemin optique parcouru par un faisceau incident.

- cet élément optique dit à invariance positionnelle est d'un seul tenant.

On entend encore par l'expression « d'un seul tenant » que cet élément optique ne résulte pas de l'assemblage de pièces initialement distinctes mais, au contraire, qu'il est monolithique.

Bien entendu, cet élément optique dit à invariance positionnelle peut être plein ou creux pour minimiser, voire annuler, la dispersion monochromatique.

Etant réalisé en verre, au moins deux de ses faces présente un revêtement réfléchissant tel que diélectrique ou métallique.

A titre d'exemple purement illustratif, l'élément optique dit à invariance positionnelle étant réalisé en verre, deux faces présentent un traitement réfléchissant tel que diélectrique, métallique ou autre, la réflexion sur la troisième face étant une réflexion interne.

De manière plus générale, l'élément optique dit à invariance positionnelle est réalisé dans un matériau transparent pour la longueur d'onde empruntant cet élément optique. Il peut ainsi être réalisé en verre, silicium ou encore en plastique.

Alternativement, cet élément optique dit à invariance positionnelle comporte trois miroirs plans ou un ensemble formé d'un prisme comportant la première surface réfléchissante, ou d'un miroir plan ou sensiblement plan, et d'un pentaprisme comportant les deuxième et troisième surfaces réfléchissantes.

- cet élément optique dit à invariance positionnelle est configuré pour permettre un déplacement relatif de la première surface réfléchissante et de l'ensemble formé desdites deuxième et troisième surfaces réfléchissantes afin d'ajuster le décalage $\Delta$ en position des faisceaux d'entrée et de sortie.

De préférence, ledit élément optique dit à invariance positionnelle comporte un ensemble formé d'un pentaprisme et d'un prisme ou d'un miroir plan ou sensiblement plan.

Le pentaprisme possède la propriété de renvoyer un faisceau émergent à 90° du faisceau incident, quel que soit l'angle d'incidence du faisceau empruntant ce pentaprisme. Il suffit alors d'orienter le miroir ou le prisme de telle sorte que le faisceau réfléchi soit parallèle au faisceau incident sur le pentaprisme.

Cette solution technique possède deux propriétés particulièrement intéressantes :

1/ Tout d'abord, elle permet d'obtenir un décalage précis entre faisceaux incident et émergent, qui ne dépendra pas de la qualité de fabrication d'un élément optique monolithique, par exemple.

2/Elle permet également d'obtenir un décalage ajustable, si l'on met le miroir ou le pentaprisme sur un élément de translation mécanique. Dans la pratique, il sera préférable de mettre le pentaprisme sur l'élément de translation car le faisceau réfléchi par le pentaprisme sera constamment perpendiculaire, même si la translation présente des imperfections dans le plan du pentaprisme.

Ainsi, ledit pentaprisme sera, de préférence, mobile en translation par rapport audit prisme ou audit miroir.

- ledit retroréflecteur étant un coin de cube ouvert, il présente un méplat parallèle à l'une des trois arêtes délimitant les première, deuxième et troisième surfaces réfléchissantes du coin de cube.

De manière avantageuse, un tel retroréflecteur offre quatre zones pleines garantissant une tolérance de fonctionnement plus importante par exemple sur les défauts de translation d'un retroréflecteur mobile. Il est également possible de travailler avec des tailles de faisceaux plus importantes.

De préférence, ce retroréflecteur est agencé par rapport audit élément optique et ledit élément optique est configuré de sorte que le décalage Δ en position entre lesdits faisceaux d'entrée et de sortie assure une réflexion du faisceau de sortie dans une région centrale de chaque surface réfléchissante, ladite région centrale étant en partie délimitée par une desdites arêtes et une droite imaginaire passant par une autre desdites arêtes, sans inclure celles-ci.
On obtient ainsi une optimisation de l'espace disponible pour chaque surface réfléchissante du coin de cube ouvert, offrant de plus grandes tolérances de fonctionnement.

- ce dispositif comporte également une ou plusieurs lentilles d'imagerie et/ou un dispositif optique fixe pour modifier ledit faisceau tel qu'un dispositif de filtrage, placé sur le chemin optique du faisceau de sortie de l'élément optique.

A titre purement illustratif, ce dispositif optique fixe peut être un masque de phase, pour une longueur d'onde donnée ("SLM" - Spatial Light Modulator). Il peut encore s'agir d'un dispositif d'occultation.
La présente invention concerne aussi un système optique comprenant un dispositif de ligne à retard optique fixe ou variable tel que décrit précédemment, un ou plusieurs ensembles optiques additionnels tels que décrits précédemment et pour chaque ensemble optique additionnel, un ensemble de communication optique pour diriger le faisceau de sortie retour du retroréflecteur dudit dispositif de ligne à retard optique fixe ou variable ou de l'ensemble optique additionnel précédent c'est-à-dire (n-1), vers l'ensemble optique additionnel subséquent, c'est-à-dire (n) avec n ≥2.
Chaque élément optique additionnel comporte ainsi :

- un retroréflecteur assurant un auto-alignement de la direction du faisceau de sortie sur la direction du faisceau incident, la direction du faisceau de sortie étant opposée à celle du faisceau incident,
- un élément optique dit à invariance positionnelle, comprenant une première surface réfléchissante, une deuxième surface réfléchissante et une troisième surface réfléchissante, lesdites première, deuxième et troisième surfaces réfléchissantes étant planes ou sensiblement planes, lesdites deuxième et troisième surfaces réfléchissantes étant agencées pour former un angle à 45° entre elles, le faisceau se propageant le long d'un chemin optique et empruntant ledit élément optique par sa face d'entrée étant réfléchi par ladite première surface avec un angle de 90° vers ladite deuxième surface, puis étant réfléchi successivement par lesdites deuxième et troisième surfaces, ou réfléchi selon un chemin optique inverse, successivement par la troisième surface, la deuxième surface et la première surface, lorsque empruntant ledit élément optique selon ladite deuxième direction, ledit faisceau est d'abord réfléchi par ladite troisième surface, pour ressortir dudit élément optique selon une direction parallèle à la direction du faisceau incident sur ledit élément optique, ledit faisceau de sortie présentant un décalage Δ en position constant par rapport au faisceau incident.

Un tel système optique permet avantageusement d'obtenir des retards très grands avec des faisceaux de faible diamètre, c'est-à-dire typiquement présentant un diamètre de faisceau inférieur ou égal à un (1) mm.
La présente invention concerne encore un interféromètre optique équipé d'un dispositif de ligne à retard optique fixe ou variable tel que décrit précédemment ou d'un système optique tel que décrit précédemment.
La présente invention concerne pareillement un système d'imagerie pour obtenir l'image d'un échantillon comprenant un dispositif de ligne à retard optique fixe ou variable tel que décrit précédemment ou un système optique tel que décrit précédemment.

**Brève description des dessins**

D'autres avantages, buts et caractéristiques particulières de la présente invention ressortiront de la description qui va suivre, faite, dans un but explicatif et nullement limitatif, en regard des dessins annexés, dans lesquels:

Fig.1 est une représentation schématique d'un dispositif de ligne optique à retard variable selon un mode de réalisation particulier de la présente invention ;
Fig. 2 est une vue en perspective du coin de cube du dispositif de ligne optique à retard variable de la Fig. 1;
Fig. 3 est une vue en perspective de l'élément optique dit à invariance positionnelle du dispositif de ligne optique à retard variable de la Fig. 1;
Fig. 4 est une vue de côté de l'élément optique de la Fig. 3 montrant le trajet d'un faisceau optique empruntant cet élément optique;
Fig. 5 montre les réflexions des faisceaux incident et retour dans un coin de cube de l'état de l'art;
Fig. 6 montre les réflexions des faisceaux incident et retour dans le coin de cube du dispositif de ligne optique à retard variable de la Fig. 1 ;
Fig. 7 montre un élément optique dit à invariance positionnelle
Fig. 8 représente schématiquement un système optique comprenant deux ensembles optiques additionnels, selon un mode de réalisation particulier de la présente invention ;

Fig. 9 représente schématiquement un système optique autoréfléchissant à maintien de polarisation, selon un mode de réalisation particulier de la présente invention

## Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

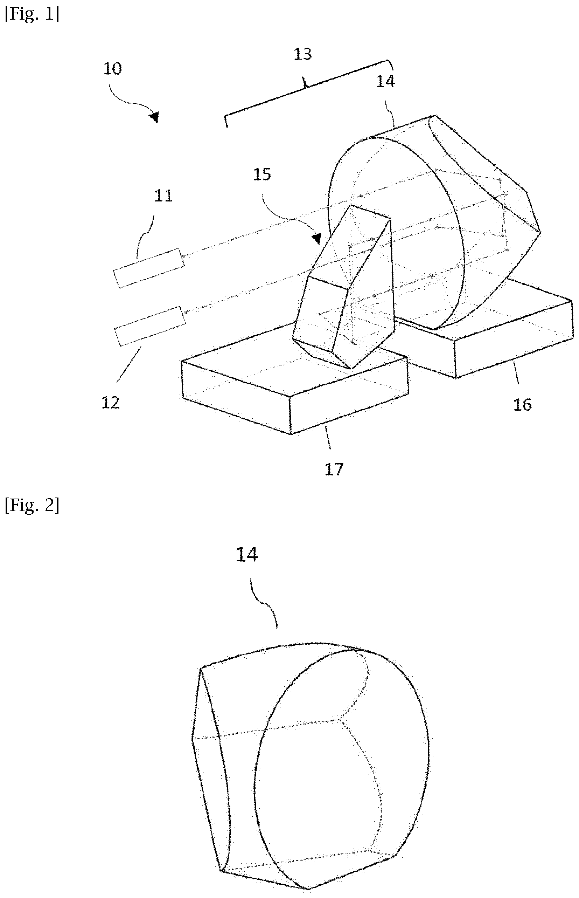

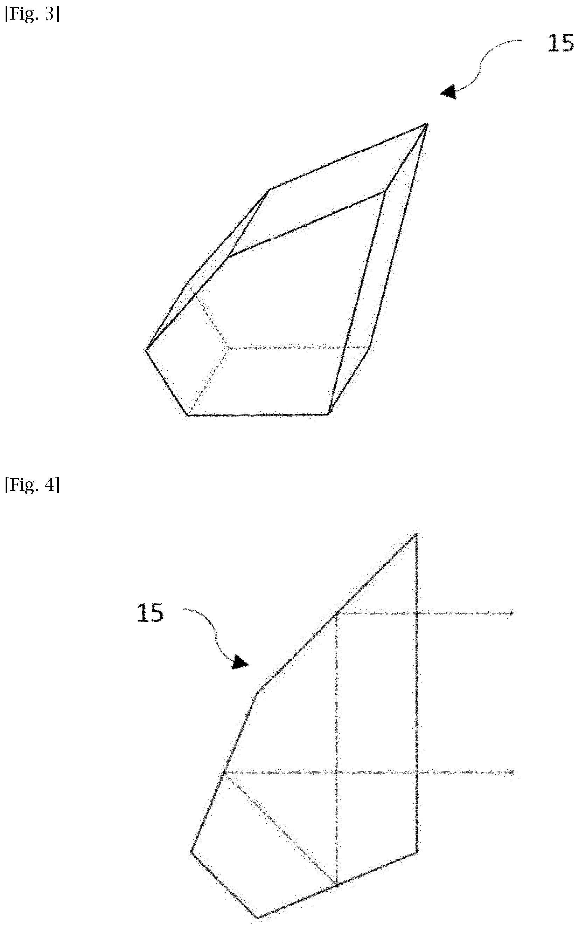

Les Figures 1 à 4 et 6 représentent schématiquement un dispositif de ligne optique à retard variable 10 selon un mode de réalisation particulier de la présente invention.

Ce dispositif de ligne optique à retard variable 10 comprend une entrée optique 11 comportant une fibre optique d'entrée et une lentille de collimation et une sortie optique 12 comprenant une fibre optique de sortie et une lentille de renvoi.

Il comporte également un ensemble optique 13 qui dirige un faisceau le long d'un chemin optique de l'entrée optique 11 du dispositif vers sa sortie optique 12, cet ensemble optique 13 comprenant :

- un coin de cube 14 assurant un auto-alignement de la direction du faisceau de sortie sur la direction du faisceau incident, la direction du faisceau de sortie, dite deuxième direction, étant opposée à celle du faisceau incident,
- un élément optique dit à invariance positionnelle 15, comprenant une première surface réfléchissante, une deuxième surface réfléchissante et une troisième surface réfléchissante, lesdites première, deuxième et troisième surfaces réfléchissantes étant planes ou sensiblement planes, lesdites deuxième et troisième surfaces réfléchissantes étant agencées pour former un angle à 45° entre elles, le faisceau se propageant le long dudit chemin optique et empruntant ledit élément optique selon ladite deuxième direction étant réfléchi par ladite première surface avec un angle de 90° vers ladite deuxième surface, puis étant réfléchi successivement par lesdites deuxième et troisième surfaces pour ressortir dudit élément optique selon une direction parallèle à la direction du faisceau incident sur cet élément optique, le faisceau de sortie présentant un décalage $\Delta$ en position constant par rapport au faisceau incident.

L'élément optique est agencé dans l'ensemble optique 13 pour renvoyer ledit faisceau émergent sur le coin de cube 14 de sorte que le faisceau emprunte une seconde fois ce coin de cube 14. En sortie du coin de cube 14, le faisceau émergent est renvoyé au niveau du faisceau incident en étant décalé d'une valeur constante $\Delta$ en position.

Le coin de cube 14 est monté sur un support mobile 16 par rapport à un bloc fixe formé de l'entrée optique 11, de la sortie optique 12 et de l'élément optique dit à invariance positionnelle 15, de sorte que la longueur du chemin optique parcouru par le faisceau peut être ajustée.

Bien entendu, il est possible d'utiliser plusieurs coins de cube 14, alternativement sur la partie mobile 16 et sur une partie fixe 17 supportant ce bloc, afin d'augmenter le nombre d'allers et retours. La seule condition est qu'après le dernier coin de cube 14, l'élément optique dit à invariance positionnelle 15 soit placé sur la partie fixe 17 supportant le bloc et réglé de façon à avoir le parallélisme des faisceaux incident et émergent.

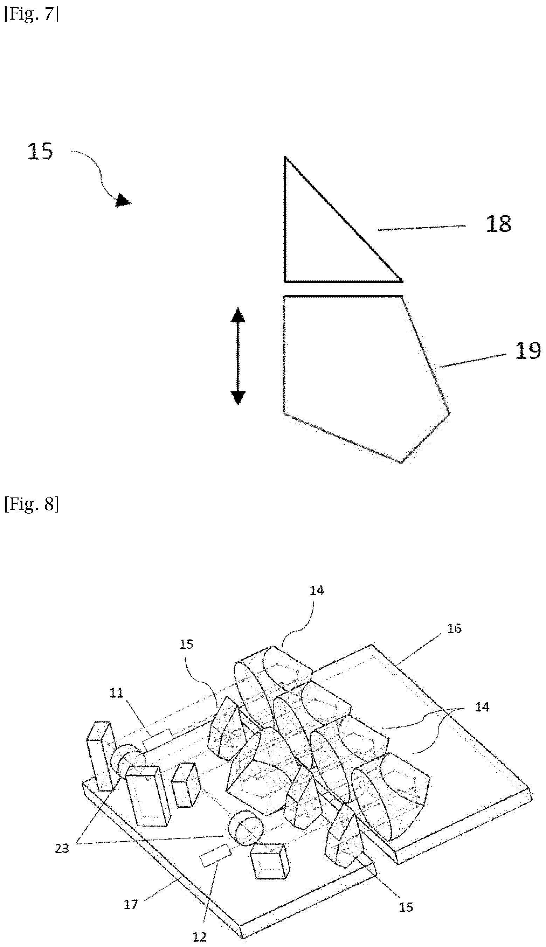

La Figure 7 montre un élément optique dit à invariance positionelle.

Cet élément optique dit à invariance positionnelle 15 comporte deux parties distinctes, à savoir un prisme 18 déterminant la première surface de réflexion de l'élément optique 15 et un pentaprisme 19 comportant les deuxième et troisième surfaces réfléchissantes.

Cet élément optique dit à invariance positionnelle 15 est configuré pour permettre un déplacement relatif de la première surface réfléchissante et de l'ensemble formé desdites deuxième et troisième surfaces réfléchissantes afin d'ajuster le décalage $\Delta$ en position des faisceaux d'entrée et de sortie. Ici, le pentaprisme 19 est monté sur un élément de translation mécanique de manière à être mobile par rapport au prisme 18.

## Dimensionnement des éléments optiques

### 1. Coin de cube

Le coin de cube 14 utilisé dans le système est traversé deux fois par le faisceau lumineux. Pour un fonctionnement optimal du dispositif de ligne optique à retard variable 10, l'orientation du coin de cube 14 est soigneusement déterminée. La taille du coin de cube 14 dépend quant à elle de la taille des faisceaux utilisés.

Un coin de cube 14 est constitué de trois faces perpendiculaires les unes par rapport aux autres. Les traits 20 pleins représentent les arrêtes formées par l'intersection des faces du coin de cube 14 et les traits 21 en pointillés représentent le symétrique d'une arrête sur la face opposée. Lorsqu'un faisceau lumineux entre dans un coin de cube 14, il va se réfléchir successivement sur chacune des trois faces, avant de ressortir, parallèle à lui-même, par un point du coin de cube 14 diamétralement opposé par rapport au point d'entrée dans le coin du cube.

Pour éviter que la qualité du faisceau soit détériorée par le coin de cube 14, il faut éviter qu'il ne se réfléchisse sur une arrête 20. Il faut donc que le faisceau incident ne soit si sur une arrête (trait plein 20), ni sur le symétrique d'une arrête sur sa face opposée (trait pointillé 21). Il existe donc six (6) secteurs angulaires 22 utilisables dans un coin de cube 14 par lequel le faisceau incident peut entrer.

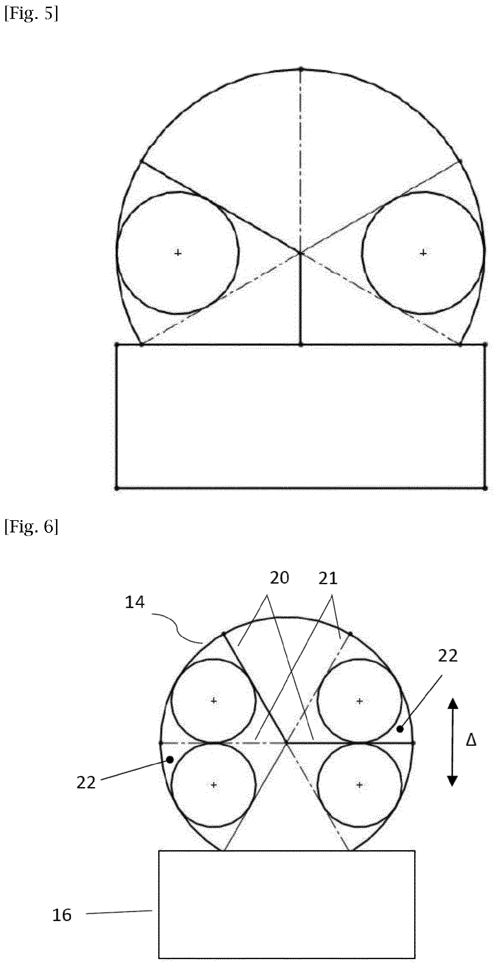

Comme représenté à la Fig. 5, les coins 14 de cube de l'état de l'art sont traditionnellement utilisés de façon à ce que le faisceau émergent sorte dans un plan horizontal contenant le faisceau incident. Un méplat perpendiculaire à l'une des arrêtes est donc généralement usiné sur la partie inférieure du coin de cube 14 pour pouvoir le poser sur un support plan.

Cependant, dans le dispositif de ligne optique à retard variable 10 de l'invention illustré à la Fig. 6, le coin de cube 14 sera traversé par un deuxième faisceau, issu de l'élément optique dit à invariance positionnelle 15, en étant décalé en position d'une quantité donné Δ par rapport au faisceau émergent du coin de cube 14.

Comme cette fois, quatre secteurs angulaires sont nécessaires, il est préférable de réaliser le méplat parallèlement à l'une des trois arrêtes 20 du coin de cube 14.

Par ailleurs, il est possible, soit de poser le coin de cube 14 sur un support plan, ce qui implique que l'élément optique dit à invariance positionnelle 15 soit positionné verticalement pour que le faisceau retour soit au-dessus du faisceau aller tel qu'illustré ici, soit de coller le coin de cube 14 sur un support vertical, ce qui implique que l'élément optique dit à invariance positionnelle 15 soit positionné horizontalement pour que le faisceau retour soit à côté du faisceau aller. Les orientations intermédiaires sont également possibles mais elles imposent alors une orientation précise de l'élément optique dit à invariance positionnelle 15 et rendent plus complexes la mise en place du dispositif de ligne optique à retard variable 10.

La croix centrale de chaque secteur angulaire représente la position optimale du faisceau correspondant.

En ce qui concerne la taille du coin de cube 14, celle-ci doit être choisie de façon à éviter les réflexions sur les arrêtes et à éviter que le faisceau ne soit vignetté par le coin de cube 14. Comme représenté sur la Figure 6, la taille minimale du coin de cube 14 est telle que le diamètre du faisceau se retrouve inscrit dans un triangle équilatéral formé par un secteur angulaire. Ainsi, si l'on note d le diamètre total du faisceau, le diamètre D du coin de cube 14 doit être au moins égal à :

[Math. 1]

$$D = 3d$$

En pratique, cette configuration n'offre que peu de tolérance de positionnement, ce qui, d'une part, oblige un positionnement précis du coin de cube 14, et d'autre part, ne correspond pas à la philosophie du système dont le but est de permettre d'obtenir un faisceau de sortie invariant quel que soit le positionnement des différents composants optiques du dispositif. Des diamètres de coins de cube étant de cinq (5) à dix (10) fois supérieurs au diamètre du faisceau incident seront donc de préférence choisis.

2. Elément optique dit à invariance positionnelle

Le but de cet élément optique est de renvoyer un faisceau avec un décalage en position constant. Pour que le système fonctionne de façon optimale, il est nécessaire que ce décalage Δ en position corresponde à l'écart entre les centres de gravité de deux triangles équilatéraux successifs formés par les secteurs angulaires du coin de cube 14. Il en résulte que le décalage, noté Δ, doit satisfaire à la formule suivante :

[Math. 2]

$$\Delta = \frac{\sqrt{3}}{6} D$$

La face d'entrée de l'élément optique doit ensuite être égale au double du décalage Δ souhaité, dans l'hypothèse où l'on souhaite avoir le faisceau incident perpendiculaire à la face d'entrée.

**Applications dérivées potentielles**

1. Ajout de lentilles de reprise d'imagerie

Un des objectifs de ce système est de pouvoir réaliser des déplacements linéaires importants sans avoir à pâtir des imperfections mécaniques liées au système de translation, qui auraient pour conséquences des variations importantes du taux de couplage dans la fibre de sortie.

Cependant, pour garantir des variations faibles du taux de couplage sur de grandes plages de distances, il est nécessaire de travailler avec des faisceaux gaussiens de diamètres importants.

En effet, un faisceau gaussien est caractérisé par son waist $\omega_0$ qui représente le rayon pour lequel la densité de puissance du faisceau est diminuée d'un facteur $1/e^2$. On montre alors que 99% de la puissance optique est contenue dans un disque de rayon $3\omega_0$. Si l'on considère deux faisceaux gaussiens, de waists identiques $\omega_0$, parfaitement alignés l'un par rapport à l'autre, c'est-à-dire avec leurs axes optiques confondus, et que l'on note D la distance entre leurs waists respectifs, alors on peut montrer que le taux de couplage entre ces deux faisceaux peut s'exprimer par la formule suivante :

$$[\text{Math. } 3]$$

$$\eta = \frac{1}{1 + \frac{\lambda^2 D^2}{4\pi^2 \omega_0^4}}$$

Ainsi, si une ligne à retard de 10ns est souhaitée, ce qui correspond à une distance de 3m environ, il est nécessaire de travailler avec des faisceaux ayant un waist de 1.3mm au moins afin d'obtenir des variations de pertes de couplage de 0.2dB maximum.

Cependant, travailler avec des faisceaux de diamètres importants est contraignant car leur alignement devient beaucoup plus sensible angulairement. Ainsi, parvenir à fixer les collimateurs générant de tels faisceaux devient très délicat et c'est finalement la taille des faisceaux qui impose une limite supérieure aux déplacements réalisables.

Une solution permet toutefois de surmonter cet inconvénient. Elle consiste à utiliser des faisceaux plus petits et à placer des lentilles d'imagerie dans le trajet optique. En effet, pour une taille de waist donné, il existe une focale de lentille qui permet, si l'on place le waist au foyer objet de la lentille, d'obtenir un waist de taille identique situé au foyer image de la lentille. La distance focale nécessaire est donnée par la formule suivante :

$$[\text{Math. } 4] \qquad f' = \frac{\pi \omega_0^2}{\lambda}$$

Il est ainsi possible d'obtenir un taux de couplage de 100% entre deux waists identiques situés à une distance 2f' l'un de l'autre, en insérant une lentille de focale f' à mi-chemin entre les deux waists.

De plus, on peut constater que, si la distance entre la lentille et chacun des deux waists est identique, on obtient des taux de couplage qui restent proche de 100%, même si les deux waists ne sont pas séparés de la distance optimale 2f'. Ainsi, s'ils sont séparés simplement de f' ou de 3f', le taux de couplage est d'environ 0.05dB, ce qui est quasiment négligeable. Et pour des distances allant de 0 (les deux waists sont confondus sur la lentille) à 4f', le taux de couplage passe à environ 0.5dB.

Par ailleurs, il est possible de multiplier le nombre de lentilles, avec une distance identique entre elles. Pour une distance optimale de 2f' entre chaque lentille, on conserve un couplage théorique parfait de 100%, et pour des distances variant entre f' et 3f', on conserve un taux de couplage théorique inférieur à 0.1dB, quel que soit le nombre de lentilles. Ceci est également valable quel que soit le waist des faisceaux, tant que la focale des lentilles répond à la formule ci-dessus.

Il est donc possible de réaliser de grands retards en utilisant de petits faisceaux, plus simple à manipuler, si l'on est capable d'utiliser des lentilles d'imagerie. L'inconvénient avec l'utilisation de lentilles, c'est que l'axe optique du faisceau incident et l'axe optique de la lentille doivent être systématiquement confondus (ou, au moins, que leurs positions relatives l'un par rapport à l'autre soient fixes) afin que le faisceau émergent soit invariant spatialement (en direction et en position) et ne provoque pas de variation du taux de couplage. C'est à ce niveau que l'ensemble optique 13 du dispositif de ligne optique à retard variable 10 de l'invention est particulièrement efficace. En effet, on peut facilement envisager de positionner une lentille à la place du collimateur de sortie de l'ensemble optique 13, en prenant avantage du fait que l'axe optique du faisceau à cet endroit sera fixe quel que soit le déplacement du système. On peut ensuite poursuivre la propagation du faisceau dans un ensemble optique 13 identique placé à côté du premier, et continuer ainsi de suite en insérant autant de lentilles que nécessaire afin d'obtenir un déplacement très important avec de petits faisceaux.

La Figure 8 représente un tel montage optique. Toutefois, dans une telle configuration, il est nécessaire de bien choisir la taille des faisceaux, la focale des lentilles et le déplacement du système de translation afin que l'ensemble concorde parfaitement. Nous avons déjà vu la relation qu'il devait y avoir entre la focale des lentilles d'imagerie 23 et la taille des faisceaux. La longueur de la platine de translation, notée L, afin de conserver des distance entre f' et 3f', est quant à elle définie par la relation suivante :

[Math. 5]

$$L = f'/4$$

Enfin, le délai qu'il sera possible d'obtenir est directement proportionnel au nombre N de lentilles qui seront utilisées et vaut :

[Math. 6]

$$\tau = \frac{2Nf'}{c}$$

Ainsi, et à titre purement illustratif, si un retard de 10ns est souhaité, en utilisant un système simple à deux lentilles 23, il sera nécessaire d'utiliser des focales d'environ 75cm et une translation de 18,75cm. La taille des faisceaux nécessaire sera alors de $610\mu$m, soit un peu moins de la moitié de celle nécessaire pour un système sans lentille.

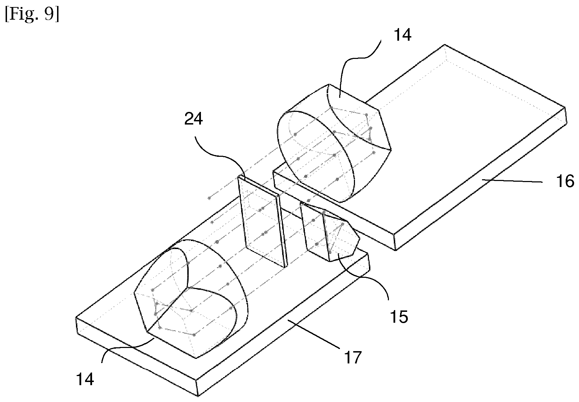

La Figure 9 représente schématiquement un système autoréfléchissant à maintien de polarisation selon un mode de réalisation particulier de la présente invention.

Les éléments de la Figure 9 portant les mêmes références que les éléments des Figures 1 à 8 représentent les mêmes objets, lesquels ne seront pas décrits de nouveau ci-après.

Ce système autoréfléchissant comprend deux coins de cube 14, un un élément optique dit à invariance positionnelle 15 et une lame demi-onde 24.

Cette lame demi-onde 24 possède des axes propres orientés à 45° par rapport au plan du support. Elle peut indépendamment être placée sur un support mobile 16 ou sur un support fixe 17, comme illustré ici.

Si plusieurs coins de cube 14 sont utilisés, la lame demi-onde 24 doit être placée de façon à avoir autant de coins de cube 24 avant et après. Il faut donc un nombre pair de coins de cube et donc au besoin en ajouter un sur le support fixe 17, avant l'élément optique dit à invariance positionnelle 15, comme ici illustré.

Sur la Figure 9, la lame demi-onde 24 est dimensionnée de façon à être présente sur le faisceau aller et retour. Ainsi, la polarisation du faisceau en sortie sera identique à la polarisation en entrée.

Alternativement, cette lame demi-onde 24 peut être présente sur seulement l'un des deux trajets (aller ou retour) et alors la polarisation du faisceau de sortie sera orthogonale à la polarisation d'entrée.

**Revendications**

1. Dispositif de ligne à retard optique fixe ou variable (10) comprenant :

   - une entrée optique (11),
   - une sortie optique (12),
   - un ensemble optique (13) qui dirige un faisceau le long d'un chemin optique de ladite entrée optique (11) vers ladite sortie optique (12), ledit ensemble optique (13) comprenant :
   - un retroréflecteur (14) assurant un auto-alignement de la direction du faisceau de sortie sur la direction du faisceau incident, la direction du faisceau de sortie, dite deuxième direction, étant opposée à celle du faisceau incident, et

   **caractérisé en ce que** ledit dispositif de ligne comprend en outre

   - un élément optique dit à invariance positionnelle (15), comprenant une première surface réfléchissante, une deuxième surface réfléchissante et une troisième surface réfléchissante, lesdites première, deuxième et troisième surfaces réfléchissantes étant planes ou sensiblement planes, lesdites deuxième et troisième surfaces réfléchissantes étant agencées pour former un angle à 45° entre elles, le faisceau se propageant le long dudit chemin optique et empruntant ledit élément optique selon ladite deuxième direction étant réfléchi par ladite première surface avec un angle de 90° vers ladite deuxième surface, puis étant réfléchi successivement par lesdites deuxième et troisième surfaces, ou réfléchi selon un chemin optique inverse, successivement par la troisième surface, la deuxième surface et la première surface, lorsque empruntant ledit élément optique selon ladite deuxième direction, ledit faisceau est d'abord réfléchi par ladite troisième surface, pour ressortir dudit élément optique selon une direction parallèle à la direction du faisceau incident sur ledit élément optique, ledit faisceau de sortie présentant un décalage $\Delta$ en position constant par rapport au faisceau incident,
   - ledit élément optique (15) étant agencé dans ledit ensemble optique (13) pour renvoyer ledit faisceau de sortie sur ledit retroréflecteur (14), le faisceau retour traversant ainsi ledit retroréflecteur (14).

2. Dispositif selon la revendication 1, **caractérisé en ce que** ledit retroréflecteur (14) est mobile par rapport auxdites entrée optique (11) et sortie optique (12) et par rapport audit élément optique (15) pour varier la longueur dudit chemin optique.

3. Dispositif selon la revendication 1 ou 2, **caractérisé en ce qu'**il comporte plusieurs retroréflecteurs (14) placés en alternance sur un support mobile en translation et sur une base fixe, ladite base fixe supportant ladite entrée optique (11), ladite sortie optique (12) et ledit ensemble optique (13).

4. Dispositif selon l'une quelconque des revendications 1 à 3, **caractérisé en ce que** ledit élément optique dit à invariance positionnelle (15) est monolithique.

5. Dispositif selon l'une quelconque des revendications 1 à 3, **caractérisé en ce que** ledit élément optique dit à invariance positionnelle (15) comporte trois miroirs plans ou un ensemble formé d'un miroir plan ou sensiblement plan, ou d'un prisme comportant la première surface réfléchissante, et d'un pentaprisme comportant les deuxième et troisième surfaces réfléchissantes.

6. Dispositif selon la revendication 5, **caractérisé en ce que** ledit élément optique dit à invariance positionnelle (15) est configuré pour permettre un déplacement relatif de la première surface réfléchissante et de l'ensemble comprenant lesdites deuxième et troisième surfaces réfléchissantes afin d'ajuster ledit décalage $\Delta$ en position des faisceaux d'entrée et de sortie.

7. Dispositif selon les revendications 5 et 6, **caractérisé en ce que** ledit élément optique dit à invariance positionnelle (15) comportant un ensemble formé d'un pentaprisme et d'un prisme ou d'un miroir plan ou sensiblement plan, ledit pentaprisme est mobile en translation par rapport audit prisme ou audit miroir.

8. Dispositif selon l'une quelconque des revendications précédentes, **caractérisé en ce que** ledit retroréflecteur (14) étant un coin de cube ouvert, il présente un méplat parallèle à l'une des trois arêtes délimitant les première, deuxième et troisième surfaces réfléchissantes du coin de cube.

9. Dispositif selon l'une quelconque des revendications précédentes, **caractérisé en ce que** ledit retroréflecteur (14) est agencé par rapport audit élément optique dit à invariance positionnelle (15) et ledit élément optique est configuré de sorte que le décalage en position Δ entre lesdits faisceaux d'entrée et de sortie assure une réflexion du faisceau de sortie dans une région centrale de chaque surface réfléchissante dudit coin de cube ouvert, ladite région centrale étant en partie délimitée par une desdites arêtes et une droite imaginaire passant par une autre desdites arêtes, sans inclure celles-ci.

10. Dispositif selon l'une quelconque des revendications précédentes, **caractérisé en ce qu'**il comporte également une ou plusieurs lentilles d'imagerie et/ou un dispositif optique fixe pour modifier ledit faisceau tel qu'un dispositif de filtrage, placé sur le chemin optique du faisceau en sortie de l'élément optique.

11. Système optique comprenant un dispositif de ligne à retard optique fixe ou variable (10) selon l'une quelconque des revendications 1 à 10, un ou plusieurs ensembles optiques additionnels selon l'une quelconque des revendications 1 à 10 et pour chaque ensemble optique (13) additionnel, un ensemble de communication optique pour diriger le faisceau de sortie retour du retroréflecteur (14) dudit dispositif de ligne à retard optique fixe ou variable (10) ou de l'ensemble optique (13) additionnel précédent c'est-à-dire (n-1), vers l'ensemble optique (13) additionnel subséquent, c'est-à-dire (n) avec n ≥2.

12. Interféromètre optique équipé d'un dispositif de ligne à retard optique fixe ou variable (10) selon l'une quelconque des revendications 1 à 10 ou d'un système optique selon la revendication 11.

13. Système d'imagerie pour obtenir l'image d'un échantillon comprenant un dispositif de ligne à retard optique fixe ou variable (10) selon l'une quelconque des revendications 1 à 10 ou d'un système optique selon la revendication 11.

14. Cavité laser autoalignée comprenant un dispositif de ligne à retard optique fixe ou variable (10) selon l'une quelconque des revendications 1 à 10 ou d'un système optique selon la revendication 11.

**Patentansprüche**

1. Feste oder variable optische Verzögerungsleitungsvorrichtung (10) mit:

    - einem optischen Eingang (11),
    - einem optischen Ausgang (12),
    - einer optischen Anordnung (13), die einen Strahl entlang eines optischen Wegs von dem optischen Eingang (11) zu dem optischen Ausgang (12) lenkt, wobei die optische Anordnung (13) aufweist:
    - einen Retroreflektor (14), der eine Selbstausrichtung der Richtung des Ausgangsstrahls bezüglich der Richtung des einfallenden Strahls sicherstellt, wobei die Richtung des Ausgangsstrahls, die als zweite Richtung bezeichnet wird, derjenigen des einfallenden Strahls entgegengesetzt ist,

**dadurch gekennzeichnet, daß** die Verzögerungsleitungsvorrichtung außerdem aufweist:

    - ein als positionsinvariant bezeichnetes optisches Element (15), mit einer ersten reflektierenden Oberfläche, einer zweiten reflektierenden Oberfläche und einer dritten reflektierenden Oberfläche, wobei die erste, die zweite und die dritte reflektierende Oberfläche flach oder im Wesentlichen flach sind, wobei die zweite und die dritte reflektierende Oberfläche so angeordnet sind, daß sie einen Winkel von 45° zwischen sich bilden, wobei der Strahl, der sich entlang des optischen Wegs ausbreitet und das optische Element in der zweiten Richtung durchläuft, von der ersten Oberfläche mit einem Winkel von 90° zu der zweiten Oberfläche hin reflektiert wird und dann nacheinander von der zweiten und der dritten Oberfläche reflektiert wird, oder entlang eines umgekehrten optischen Wegs nacheinander von der dritten Oberfläche, der zweiten Oberfläche und der ersten Oberfläche reflektiert wird, wenn der Strahl, wenn er das optische Element in der zweiten Richtung durchläuft, zuerst von der dritten Oberfläche reflektiert wird, um aus dem optischen Element entlang einer Richtung auszutreten, die parallel zur Richtung des auf das optische Element einfallenden Strahls ist, wobei der Ausgangsstrahl einen konstanten Positionsversatz Δ in Bezug auf den einfallenden Strahl aufweist,
    - wobei das optische Element (15) in der optischen Anordnung (13) angeordnet ist, um den Ausgangsstrahl zum Retroreflektor (14) zurückzuleiten, wobei der zurückgeleitete Strahl so den Retroreflektor (14) durchquert.

2. Vorrichtung nach Anspruch 1, **dadurch gekennzeichnet, daß** der Retroreflektor (14) relativ zu dem optischen Eingang (11) und dem optischen Ausgang (12) und relativ zu dem optischen Element (15) beweglich ist, um die Länge des optischen Weges zu variieren.

3. Vorrichtung nach Anspruch 1 oder 2, **dadurch gekennzeichnet, daß** sie mehrere Retroreflektoren (14) aufweist, die abwechselnd auf einem in Translation beweglichen Träger und auf einer festen Basis angeordnet sind, wobei die feste Basis den optischen Eingang (11), den optischen Ausgang (12) und die optische Anordnung (13) trägt.

4. Vorrichtung nach einem der Ansprüche 1 bis 3, **dadurch gekennzeichnet, daß** das als positionsinvariant bezeichnete optische Element (15) monolithisch ist.

5. Vorrichtung nach einem der Ansprüche 1 bis 3, **dadurch gekennzeichnet, daß** das als positionsinvariant bezeichnete optische Element (15) drei ebene Spiegel oder einen Satz aufweist, der aus einem ebenen oder im Wesentlichen ebenen Spiegel oder aus einem Prisma mit der ersten reflektierenden Oberfläche und aus einem Penta-Prisma mit der zweiten und dritten reflektierenden Oberfläche gebildet ist.

6. Vorrichtung nach Anspruch 5, **dadurch gekennzeichnet, daß** das als positionsinvariant bezeichnete optische Element (15) so konfiguriert ist, daß es eine relative Verlagerung der ersten reflektierenden Oberfläche und der Anordnung ermöglicht, welche die zweite und dritte reflektierende Oberfläche aufweist, um den Positionsversatz Δ der Eingangs- und Ausgangsstrahlen einzustellen.

7. Vorrichtung nach den Ansprüchen 5 und 6, **dadurch gekennzeichnet, daß** bei dem als positionsinvariant bezeichneten optischen Element (15), das eine Anordnung aufweist, die aus einem Penta-Prisma und einem Prisma oder einem ebenen oder im Wesentlichen ebenen Spiegel gebildet ist, das Penta-Prisma in Bezug auf das Prisma oder den Spiegel in Translation beweglich ist.

8. Vorrichtung nach einem der vorhergehenden Ansprüche, **dadurch gekennzeichnet, daß** der Retroreflektor (14) eine offene Würfelecke ist und eine Abflachung aufweist, die parallel zu einer der drei Kanten ist, welche die erste, die zweite und die dritte reflektierende Oberfläche der Würfelecke begrenzen.

9. Vorrichtung nach einem der vorhergehenden Ansprüche, **dadurch gekennzeichnet, daß** der Retroreflektor (14) in Bezug auf das als positionsinvariant bezeichnete optische Element (15) angeordnet ist und das optische Element so konfiguriert ist, daß der Positionsversatz Δ zwischen dem Eingangs- und dem Ausgangsstrahl eine Reflexion des Ausgangsstrahls in einen zentralen Bereich jeder reflektierenden Oberfläche der offenen Würfelecke sicherstellt, wobei der zentrale Bereich teilweise durch eine der Kanten und eine imaginäre Gerade begrenzt ist, die durch eine andere der Kanten verläuft, ohne diese einzuschließen.

10. Vorrichtung nach einem der vorhergehenden Ansprüche, **dadurch gekennzeichnet, daß** sie auch eine oder mehrere Abbildungslinsen und/oder eine feste optische Vorrichtung zum Modifizieren des Strahls, etwa eine Filtervorrichtung, aufweist, die auf dem optischen Weg des Strahls am Ausgang des optischen Elements angeordnet ist.

11. Optisches System mit einer festen oder variablen optischen Verzögerungsleitungsvorrichtung (10) nach einem der Ansprüche 1 bis 10, einer oder mehreren zusätzlichen optischen Anordnungen nach einem der Ansprüche 1 bis 10 und, für jede zusätzliche optische Anordnung (13), mit einer optischen Kommunikationsanordnung, um den vom Retroreflektor (14) der festen oder variablen optischen Verzögerungsleitungsvorrichtung (10) oder der vorangehenden, also (n-1), zusätzlichen optischen Anordnung (13) zurückkehrenden Ausgangsstrahl zu der nachfolgenden zusätzlichen optischen Anordnung (13), also (n) mit n ≥2, zu leiten.

12. Optisches Interferometer, ausgestattet mit einer festen oder variablen optischen Verzögerungsleitungsvorrichtung (10) nach einem der Ansprüche 1 bis 10 oder mit einem optischen System nach Anspruch 11.

13. Bildgebungssystem zum Erhalten des Bildes einer Probe, mit einer festen oder variablen optischen Verzögerungsleitungsvorrichtung (10) nach einem der Ansprüche 1 bis 10 oder einem optischen System nach Anspruch 11.

14. Selbstausgerichteter Laserresonator, mit einer festen oder variablen optischen Verzögerungsleitungsvorrichtung (10) nach einem der Ansprüche 1 bis 10 oder einem optischen System nach Anspruch 11.

**Claims**

1. An optical-delay-line device (10) providing a fixed or variable optical delay, said device comprising:

   - an optical input (11),
   - an optical output (12),
   - an optical assembly (13) that directs a beam along an optical path from said optical input (11) to said optical output (12), said optical assembly (13) comprising:
   - a retroreflector (14) that ensures a self-alignment of the direction of the output beam with the direction of the incident beam, the direction of the output beam,

   which is called the second direction, being opposite to that of the incident beam, **characterized in that** said optical-delay-line device (10) further comprises

   - an optical element (15) that is said to ensure positional invariance, comprising a first reflective surface, a second reflective surface and a third reflective surface, said first, second and third reflective surfaces being planar or substantially planar, said second and third reflective surfaces being arranged to make therebetween an angle of 45°, the beam that propagates along said optical path and that enters said optical element in said second direction, being reflected by said first surface with an angle of 90° toward said second surface, then being reflected in succession by said second and third surfaces, or reflected along an inverse optical path, in succession by the third surface, the second surface and the first surface, when it enters said optical element in said second direction, said beam is reflected first by said third surface, in order to exit from said optical element in a direction parallel to the direction of the beam incident on said optical element, said output beam having a constant positional offset $\Delta$ with respect to the incident beam,
   - said optical element (15) being arranged in said optical assembly (13) so as to steer said output beam onto said retroreflector (14), the return beam thus passing through said retroreflector (14).

2. The device as claimed in claim 1, **characterized in that** said retroreflector (14) is movable with respect to said optical input (11) and optical output (12) and with respect to said optical element (15) in order to vary the length of said optical path.

3. The device as claimed in claim 1 or 2, **characterized in that** it comprises a plurality of retroreflectors (14) placed alternately on a translationally movable holder and on a fixed base, said fixed base bearing said optical input (11), said optical output (12) and said optical assembly (13).

4. The device as claimed in any one of claims 1 to 3, **characterized in that** said optical element (15) that is said to ensure positional invariance is monolithic.

5. The device as claimed in any one of claims 1 to 3, **characterized in that** said optical element (15) that is said to ensure positional invariance comprises three planar mirrors or an assembly formed from a planar or substantially planar mirror, or from a prism comprising the first reflective surface, and from a pentaprism comprising the second and third reflective surfaces.

6. The device as claimed in claim 5, **characterized in that** said optical element (15) that is said to ensure positional invariance is configured to allow a relative movement of the first reflective surface and of the assembly comprising said second and third reflective surfaces in order to adjust said positional offset $\Delta$ of the input and output beams.

7. The device as claimed in claims 5 and 6, **characterized in that** said optical element (15) that is said to ensure positional invariance comprises an assembly formed from a pentaprism and from a prism or from a planar or substantially planar mirror, said pentaprism is translationally movable with respect to said prism or to said mirror.

8. The device as claimed in any one of the preceding claims, **characterized in that** said retroreflector (14) being an open corner-cube reflector, it has a flat parallel to one of the three ridges delineating the first, second and third reflective surfaces of the corner-cube reflector.

9. The device as claimed in any one of the preceding claims, **characterized in that** said retroreflector (14) is arranged with respect to said optical element (15) that is said to ensure positional invariance and said optical element is configured so that the positional offset $\Delta$ between said input and output beams ensures a reflection of the output beam in a central region of each reflective surface of said open corner-cube reflector, said central region being partially delineated by one of said ridges and an imaginary straight line passing through another of said ridges, without including them.

10. The device as claimed in any one of the preceding claims, **characterized in that** it also comprises one or more imaging lenses and/or a fixed optical device for modifying said beam such as a filtering device, placed on the optical path of the beam output from the optical element.

11. An optical system comprising an optical-delay-line device (10) providing a fixed or variable optical delay as claimed in any one of claims 1 to 10, one or more additional optical assemblies as claimed in any one of claims 1 to 10 and, for each additional optical assembly (13), an optical communicating assembly for directing the return beam output from the retroreflector (14) of said optical-delay-line device (10) providing a fixed or variable optical delay or from the preceding additional optical assembly (13), i.e. assembly (n -1), towards the subsequent additional optical assembly (13), i.e. assembly (n), with n $\geq 2$.

12. An optical interferometer equipped with an optical-delay-line device (10) providing a fixed or variable optical delay as claimed in any one of claims 1 to 10 or with an optical system as claimed in claim 11.

13. An imaging system for obtaining the image of a sample comprising an optical-delay-line device (10) providing a fixed or variable optical delay as claimed in any one of claims 1 to 10 or an optical system as claimed in claim 11.

14. A self-aligned laser cavity comprising an optical-delay-line device (10) providing a fixed or variable optical delay as claimed in any one of claims 1 to 10 or an optical system as claimed in claim 11.

[Fig. 1]

[Fig. 2]

[Fig. 3]

15

[Fig. 4]

15

[Fig. 5]

[Fig. 6]

[Fig. 7]

[Fig. 8]

[Fig. 9]

## RÉFÉRENCES CITÉES DANS LA DESCRIPTION

**Documents brevets cités dans la description**

- CN 203324573 U